Europäisches Patentamt

(19) European Patent Office

Office européen des brevets

(11) Publication number: **0 060 125**
**B1**

(12) **EUROPEAN PATENT SPECIFICATION**

(45) Date of publication of patent specification: **29.05.85**

(21) Application number: **82301175.4**

(22) Date of filing: **08.03.82**

(51) Int. Cl.⁴: $C\ 01\ B\ 11/06,\ C\ 01\ F\ 11/24$

(54) Production of calcium hypochlorite.

(30) Priority: **09.03.81 ZA 811549**

(43) Date of publication of application:
**15.09.82 Bulletin 82/37**

(45) Publication of the grant of the patent:
**29.05.85 Bulletin 85/22**

(84) Designated Contracting States:
**BE DE FR GB IT**

(56) References cited:
**US-A-3 030 177**
**US-A-3 251 647**
**US-A-3 544 267**
**US-A-3 767 775**

(73) Proprietor: **KLIPFONTEIN ORGANIC PRODUCTS CORPORATION LIMITED**
**Siding No. 1423**
**Elandsfontein Transvaal (ZA)**

(72) Inventor: **Morgan, David Lewis**
**106 Longride Ridge Road Glenhazel**
**Johannesburg Transvaal (ZA)**

(74) Representative: **Spencer, Graham Easdale et al**
**A.A. Thornton & Co Northumberland House**
**303-306, High Holborn**
**London WC1V 7LE (GB)**

Courier Press, Leamington Spa, England.

# Description

This invention is concerned with the production of calcium hypochlorite and, more particularly, with the production of dibasic calcium hypochlorite.

Neutral calcium hypochlorite $(Ca(OCl)_2)$ is used extensively, particularly for swimming pool sanitation. It is normally produced by the chlorinating of a high quality lime $(Ca(OH)_2)$, but this lime is expensive. The lime which is readily available is cheaper, but is of a poor quality containing much iron, other heavy metals, manganese, silica, alumina and other impurities. The iron and other heavy metals encourage the decomposition of the final calcium hypochlorite product, while the manganese causes unwanted colour contamination. Other impurities are deleterious because the dilute the calcium hypochlorite content in the final product and make the product slower to dissolve.

In U.S. Patent 3,760,064 a process of making neutral calcium hypochlorite from such a poor quality lime is described; the process essentially comprises reacting a slurry of the lime with a chlorinating agent, such as chlorine gas or hypochlorite ions, to form basic calcium hypochlorite crystals, precipitating the iron-containing ions from the slurry in the form of an insoluble salt, separating the insoluble iron-containing salt from the calcium hypochlorite crystals, and converting the latter into neutral calcium hypochlorite. It will be seen that an essential feature of this prior process is the precipitation of iron-containing ions from the slurry (by the addition of certain ions, such as barium, zinc, strontium, cadmium, silver or mercury ions, to the slurry).

We have now found that the precipitation of the soluble iron-containing ions is not necessary and that the expense of using precipitating ions for this purpose can be avoided. We have found that a product which is purer than that of U.S. Patent 3,760,064, principally in that it contains substantially less of undesirable impurities other than iron, can be obtained by carrying out the process so that large crystals of dibasic calcium hypochlorite are obtained and separating these, on the basis of particle size, from the insoluble impurities which are all of smaller particle size.

According to the present invention, therefore, there is provided a method of making crystals of dibasic calcium hypochlorite, which comprises the steps of:

(i) chlorinating a slurry of lime which contains impurities including iron, other heavy metals, manganese, silica and alumina to form a mother liquor and separating the insoluble impurities from the mother liquor to give a solution containing hypochlorite ions and free of insoluble impurities;

(ii) reacting lime which contains impurities including iron, other heavy metals, manganese, silica and alumina with the solution from step (i) to produce large crystals of dibasic calcium hypochlorite, mother liquor and fine insoluble impurities in a slurry; and

(iii) without treating the slurry to precipitate out the iron impurities, separating the large crystals of dibasic calcium hypochlorite from the mother liquor and fine insoluble impurities.

We have found that dibasic calcium hypochlorite crystals can be obtained by this process wherein at least 80% of the original impurities in the starting lime have been removed.

The terms "large" and "fine" as used herein to describe respectively, the dibasic calcium hypochlorite crystals and the insoluble impurities, are used in a relative sense; that is to say the said crystals are large in relation to said insoluble impurities, and the difference in size is such that the two materials can be separated by any of the size classification methods known in the art. These methods include wet size classification methods, such as differential settling, particularly against an upward flow of clarified mother liquor, hydrocyclone and centrifugal classifiers; flotation of the fine impurities; and filtration followed by drying and then dry classification methods, such as sieving and air-classification. All these methods are well known in the art.

Large crystals of dibasic calcium hypochlorite are produced by methods such as seeding the medium with seed crystals or using a continuous process where seed crystals are continuously being produced. It is essential to the invention that large, easily separable, crystals of dibasic calcium hypochlorite be produced. This enables these crystals to be separated from the fine insoluble impurities. The dibasic calcium hypochlorite crystals so separated are of good quality and can be converted into neutral calcium hypochlorite crystals by methods and techniques well known in the art, for example chlorination in an aqueous medium.

The solution containing hypochlorite ions which is reacted with the lime is typically produced by chlorinating lime in the presence of water to produce a mother liquor and fine insoluble impurities and separating the impurities from the mother liquor. The chlorination may be effected using any known chlorinating agent, the preferred chlorinating agent being chlorine gas.

The mother liquor or filtrate produced after separation of dibasic calcium hypochlorite crystals may be partially re-cycled to the chlorination step, and the remainder used to produce a calcium chloride solution. The mother liquor may be treated to remove dissolved hypochlorite and manganese values producing a relatively pure calcium chloride solution.

An embodiment of the invention will now be described with reference to the attached flowsheet.

Referring to the flowsheet, the first step involves slurrying a poor quality lime with water and filtrate from a step further down the process and chlorinating the slurry. The solution, which is as concentrated as possible in dissolved hypochlorite, is filtered to remove insoluble precipitate which is discarded. The insoluble precipitate will contain all the major impurities except for manganese which remains in solution in the form of permanganate.

The filtrate is taken to step (2) where further lime is added and caused to react with the filtrate under conditions encouraging the growth of large crystals of dibasic calcium hypochlorite. As mentioned above such conditions include the use of seed crystals. The crystals of dibasic calcium hypochlorite are separated from the fine, gelatinous insoluble impurities which form using any of the methods mentioned above, filtered and washed with a little water. This water can be recycled to the first chlorination step.

The mother liquor is filtered to remove remaining insoluble impurities. The filtrate is divided into two parts — one part being re-cycled to the first chlorination step and the other part being treated to decompose the hypochlorite values and remove the dissolved manganese. The resulting solution is a calcium chloride solution. The concentration of the calcium chloride solution will depend on the amount of water which is added initially.

The crystals of dibasic calcium hypochlorite separated from the mother liquor in step (2) are of high purity, at least 80 percent of the impurities in the original lime having been removed. The crystals may contain a certain amount of manganese and this may be removed by washing the crystals.

The dibasic calcium hypochlorite crystals may thereafter be converted into neutral crystals of calcium hypochlorite using known methods and techniques.

An example of the invention will now be described. Reference is made in this Example to the flowsheet.

Example
Lime (205 g) having an analysis

| | |
|---|---|
| Ca(OH)$_2$ | 96% |
| CaCO$_3$ | 1% |
| SiO$_2$ | 1,6% |
| Mg | 0,5% |
| Mn | 0,28% |
| Fe | 0,21% |
| Al | 0,15% |

was slurried up with solution (700 g) containing 4,1% by weight dissolved calcium hypochlorite and 20% by weight calcium chloride and water (500 g). The calcium hypochlorite/calcium chloride solution was obtained after filtering the dibasic calcium hypochlorite crystals in step (2) (see flowsheet). Chlorination was continued to the point where the Ca(OH)$_2$ concentration was about 0,5% and the solution filtered. The filtrate was essentially free of impurities except manganese, which was present as permanganate.

The same lime (205 g) was added to the filtrate in the presence of seed crystals encouraging the growth of large crystals of dibasic calcium hypochlorite. These large crystals were separated from the fine insoluble precipitate present by differential settling against an upward flow of mother liquor, and filtration, washed with a little water to give a product composition

| | |
|---|---|
| Ca(OH)$_2$ | 25% |
| Ca(OCl)$_2$ | 26% |
| CaCl$_2$ | 4% |
| SiO$_2$ | 0,04% |
| Mg | 0,02% |
| Mn | 0,002% |
| Fe | 0,01% |
| Al | 0,01% |

This demonstrates an overall purification of about 90%.

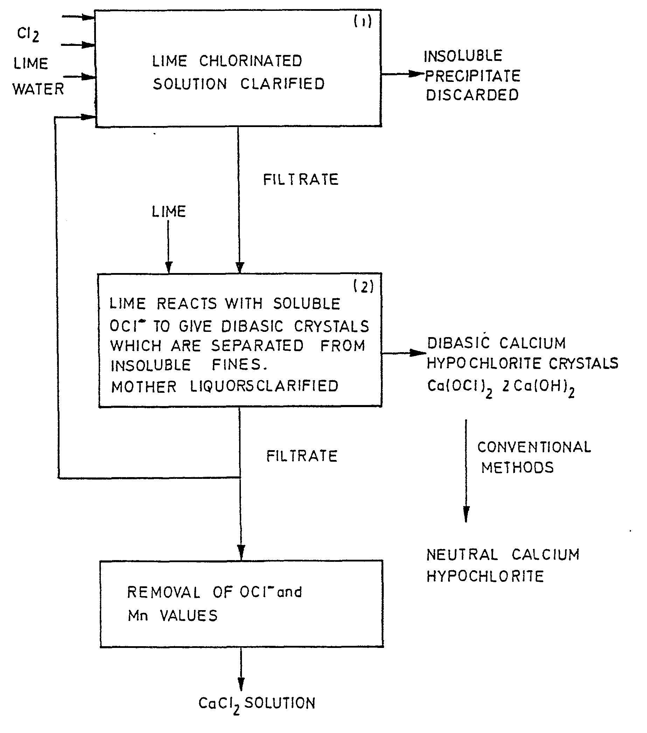

Claims

1. A method of making crystals of dibasic calcium hypochlorite, which comprises the steps of:
(i) chlorinating a slurry of lime which contains impurities including iron, other heavy metals, manganese, silica and alumina to form a mother liquor and separating the insoluble impurities from the mother liquor to give a solution containing hypochlorite ions and free of insoluble impurities;
(ii) reacting lime which contains impurities including iron, other heavy metals, manganese, silica and alumina with the solution from step (i) to produce large crystals of dibasic calcium hypochlorite, mother liquor and fine insoluble impurities in a slurry; and
(iii) without treating the slurry to precipitate out the iron impurities, separating the large crystals of dibasic calcium hypochlorite from the mother liquor and fine insoluble impurities.

2. A method according to claim 1, in which chlorination is effected with chlorine gas.

3. A method according to any of claims 1 to 2, in which the large crystals of dibasic calcium hypochlorite are produced in the presence of seed crystals.

4. A method according to any of claims 1 to 3, in which the dibasic calcium hypochlorite obtained is converted into neutral calcium hypochlorite.

Revendications

1. Un procédé pour fabriquer des cristaux d'hypochlorite de calcium dibasique, qui comprend les étapes suivantes:

(i) chloration d'une suspension de chaux qui contient des impuretés comprenant du fer, d'autres métaux lourds, du manganèse, de la silice et de l'alumine pour former une liqueur-mère et séparation des impuretés insolubles de la liqueur-mère pour donner une solution contenant des ions hypochlorite et exempte d'impuretés insolubles;

(ii) réaction de chaux qui contient des impuretés comprenant du fer, d'autres métaux lourds, du manganèse, de la silice et de l'alumine avec la solution de l'étape (i) pour produire de gros cristaux d'hypochlorite de calcium dibasique, la liqueur-mère et des impuretés insolubles dans une suspension; et (iii) sans traiter la suspension pour précipiter les impuretés de fer, séparation des gros cristaux d'hypochlorite de calcium dibasique de la liqueur-mère et des impuretés insolubles.

2. Un procédé selon la revendication 1, dans lequel la chlorination est effectuée par le chlore gazeux.

3. Un procédé selon l'une quelconque des revendications 1 et 2, dans lequel les gros cristaux d'hypochlorite de calcium dibasique sont produits en mettant en oeuvre l'étape (iii) en présence de germes cristallins.

4. Un procédé selon l'une quelconque des revendications 1 à 3, dans lequel l'hypochlorite de calcium hémibasique est converti en hypochlorite de calcium neutre.

**Patentansprüche**

1. Verfahren zur Herstellung von Kristallen zweibasischem Calciumhypochlorits mit den Schritten:

(I) Chlorieren einer Aufschlämmung von Kalk mit darin enthaltenen Verunreinigungen einschließlich Eisen, anderer Schwermetalle, Mangan, Kieselerde und Tonerde, zur Bildung einer Ausgangslauge und Abscheiden der unlöslichen Verunreinigungen aus der Ausgangslauge zur Bildung einer Hypochloritionen enthaltenden, von unlöslichen Verunreinigungen freien Lösung;

(II) Reagierenlassen von Kalk mit darin enthaltenen Verunreinigungen einschließlich Eisen, anderer Schwermetalle, Mangan, Kieserlerde und Tonerde mit der Lösung aus Schritt (I) zur Erzeugung von großen Kristallen zweibasischen Calciumhypochlorits, Ausgangslauge und feinen unlöslichen Verunreinigungen in einer Aufschlämmung und

(III) Trennen der großen Kristalle zweibasischen Calciumhypochlorits von Ausgangslauge und feinen unlöslichen Verunreinigungen, ohne die Aufschlämmung so zu behandeln, daß die Eisenverunreinigungen ausgefällt werden.

2. Verfahren nach Anspruch 1, bei dem das Chlorieren mit Chlorgas durchgeführt wird.

3. Verfahren nach Anspruch 1 oder 2, bei dem die großen Kristalle zweibasischen Calciumhypochlorits in Anwesenheit von Kristallkeimen erzeugt werden.

4. Verfahren nach einem der Ansprüche 1 bis 3, bei dem das gewonnene zweibasische Calciumhypochlorit in neutrales Calciumhypochlorit umgewandelt wird.

Cl$_2$

LIME

WATER

(1)

LIME CHLORINATED
SOLUTION CLARIFIED

INSOLUBLE
PRECIPITATE
DISCARDED

FILTRATE

LIME

(2)

LIME REACTS WITH SOLUBLE
OCl$^-$ TO GIVE DIBASIC CRYSTALS
WHICH ARE SEPARATED FROM
INSOLUBLE FINES.
MOTHER LIQUORS CLARIFIED

DIBASIC CALCIUM
HYPOCHLORITE CRYSTALS
Ca(OCl)$_2$ 2Ca(OH)$_2$

CONVENTIONAL
METHODS

FILTRATE

NEUTRAL CALCIUM
HYPOCHLORITE

REMOVAL OF OCl$^-$ and
Mn VALUES

CaCl$_2$ SOLUTION

1